# EUROPÄISCHE PATENTSCHRIFT

(11) **EP 4 197 756 B1**
(45) Veröffentlichungstag und Bekanntmachung des Hinweises auf die Patenterteilung: **16.09.2026**
(21) Anmeldenummer: 22211074.4
(22) Anmeldetag: 02.12.2022
(51) Int. Cl.: B29C 70/44, B29C 70/54, B29C 65/00, B29C 33/30, B29C 33/44, B29C 70/46, B29L 31/30, B29L 31/32, B60B 5/02

(54) **VERFAHREN ZUR HERSTELLUNG EINER FELGE, FELGE UND WERKZEUGEINRICHTUNG**
METHOD FOR PRODUCING A RIM, RIM AND TOOL DEVICE
PROCÉDÉ DE FABRICATION D'UNE JANTE, JANTE ET DISPOSITIF OUTIL

(30) Priorität: 13.12.2021 DE 102021006134
(43) Veröffentlichungstag der Anmeldung: 21.06.2023
(73) Patentinhaber: DT Swiss AG, 2504 Biel (CH)
(72) Erfinder: Henig, Andreas, 2504 Biel (CH); Renfer, Thomas, CH-2543 Lengnau (CH)
(74) Vertreter: BSB Patentanwälte Schütte & Engelen Partnerschaft mbB

(56) Entgegenhaltungen:
- US-A1- 2002 108 249
- US-A1- 2004 227 393
- US-B2- 11 142 020

## Beschreibung

Die Erfindung betrifft ein Verfahren zur Herstellung einer Felge aus Faserverbundwerkstoff für im bestimmungsgemäßen Gebrauch regelmäßig wenigstens teilweise muskelbetriebene Fahrzeuge und insbesondere Fahrräder, eine mit dem erfindungsgemäßen Verfahren hergestellte Felge und eine Werkzeugeinrichtung, mit der das Verfahren durchgeführt werden kann.

Im Stand der Technik sind Felgen aus faserverstärkten Kunststoffen bekannt geworden, mit denen das Gewicht der Felgen verringert werden kann. Gleichzeitig erreichen solche Felgen bei geringerem Gesamtgewicht eine vergleichbare oder sogar höhere Stabilität wie Metallfelgen. Ein Nachteil derartiger Felgen ist allerdings die aufwendige Herstellung, da viele Herstellungsschritte meist von Hand durchgeführt werden müssen, was zu höheren Kosten führt. Außerdem sind die vielen manuellen Verfahrensschritte fehleranfällig, wodurch die Ausschussrate steigt und die Herstellkosten nochmals erhöht werden. Andererseits sind die Stückzahlen hochwertiger Fahrradfelgen nicht so groß, dass sich die Entwicklung und der Aufbau einer vollautomatisierten Fertigung rechnen würde.

Die US 11 142 020 B2 offenbart eine Felge für Fahrräder aus Faserverbundwerkstoff, ein Verfahren zur Herstellung und ein Werkzeug, welches zwei Platten und einen Ring umfasst. Die beiden seitlichen Platten des Werkzeugs stoßen im zentralen Bereich des Felgenbodens aufeinander. Das führt regelmäßig zu optischen Auffälligkeiten.

Es ist deshalb die Aufgabe der vorliegenden Erfindung, ein Verfahren zur Herstellung einer Felge aus Faserverbundwerkstoff zur Verfügung zu stellen, mit dem Felgen mit besserer Qualität und vorzugsweise einer geringeren Ausschussrate herstellbar sind. Weiterhin soll ein entsprechendes Werkzeug zur Verfügung gestellt werden.

Diese Aufgabe wird gelöst durch ein Verfahren mit den Merkmalen des Anspruchs 1 und durch eine Werkzeugeinrichtung mit den Merkmalen des Anspruchs 11. Bevorzugte Weiterbildungen und Ausgestaltungen der Erfindung sind Gegenstand der jeweiligen Unteransprüche. Weitere Vorteile und Merkmale der vorliegenden Erfindung ergeben sich aus der allgemeinen Beschreibung und der Beschreibung der Ausführungsbeispiele.

Ein erfindungsgemäßes Verfahren dient zur Herstellung einer Felge aus Faserverbundwerkstoff für (im bestimmungsgemäßen und typischen Betrieb) wenigstens teilweise muskelbetriebene Fahrzeuge und insbesondere Fahrräder und wird unter Verwendung einer Werkzeugeinrichtung mit zwei Formeinrichtungen durchgeführt. Die Werkzeugeinrichtung weist zwei Formeinrichtungen auf, zum Beispiel eine linke Formeinrichtung und eine rechte Formeinrichtung. Die Werkzeugeinrichtung umfasst weiterhin eine Ringeinrichtung.

Das Verfahren wird mit den folgenden Verfahrensschritten in dieser oder einer anderen sinnvollen Reihenfolge durchgeführt:
- Es wird eine Formeinrichtung der beiden Formeinrichtungen ausgewählt und bereitgestellt. Die Formeinrichtung umfasst eine Flankenkontaktfläche zur Ausbildung einer seitlichen (und zum Beispiel der linken oder auch der rechten) Felgenflanke.
- Es wird ein zu der ausgewählten Formeinrichtung passendes Hilfsformteil der Werkzeugeinrichtung mit der ausgewählten Formeinrichtung verbunden, sodass die ausgewählte Formeinrichtung zusammen mit dem Hilfsformteil eine um eine Symmetrieachse der Felge umlaufende Formfläche für den Felgenboden bildet, welche bereichsweise auf der ausgewählten Formeinrichtung und bereichsweise auf dem Hilfsformteil ausgebildet.
- Es wird (wenigstens) eine erste Faserlage des wenigstens einen Faserverbundwerkstoffs auf die Flankenkontaktfläche der ausgewählten Formeinrichtung aufgebracht, welche die Sichtlage wenigstens eines überwiegenden Teils der Sichtfläche und insbesondere nahezu die gesamte oder die gesamte Sichtfläche der zugehörigen (und zum Beispiel linken) Felgenflanke bildet, wobei die erste Faserlage nicht nur auf die Flankenkontaktfläche der ausgewählten Formeinrichtung, sondern auch auf den Felgenbodenbereich des Hilfsformteils aufgebracht wird, um im Bereich des Felgenbodens eine durchgängige erste Faserlage zu bilden. Das Hilfsformteil wird entfernt. (Dabei nimmt die erste Faserlage besonders bevorzugt und vorteilhaft an der ausgewählten Formeinrichtung und dem Hilfsformteil die Querschnittsform der Felge im Bereich des Felgenbodens an. Die erste Faserlage wird dadurch vorgeformt und behält auch nach der Entfernung des Hilfsformteils die ausgebildete Querschnittsform bei.)
- Es wird die andere Formeinrichtung bereitgestellt, die eine Flankenkontaktfläche zur Ausbildung der anderen (und gegenüberliegenden) seitlichen Felgenflanke umfasst. Diese Felgenflanke kann zum Beispiel die rechte Felgenflanke oder umgekehrt entsprechend die linke Felgenflanke ausbilden.
- Es wird (wenigstens) eine erste Faserlage des wenigstens einen Faserverbundwerkstoffs auf die Flankenkontaktfläche der anderen Formeinrichtung aufgebracht, welche als Sichtlage wenigstens einen überwiegenden Teil der Sichtfläche und insbesondere nahezu die gesamte oder die gesamte Sichtfläche der anderen Felgenflanke bildet.
- Es wird eine Mehrzahl von Ringsegmenten zu einer Ringeinrichtung mit einer (radial innen) umlaufenden Felgenbettkontaktfläche verbunden und darauf wird wenigstens eine erste Faserlage des Faserverbundwerkstoffs aufgebracht, welche das Felgenbett bildet.
- Die Ringeinrichtung wird an eine der Formeinrichtungen angelegt (also zum Beispiel die linke oder die rechte Formeinrichtung). Die andere Formeinrichtung (also dementsprechend die rechte oder linke Formeinrichtung) wird daran angelegt und die Ringeinrichtung und die Formeinrichtungen werden miteinander verbunden.
- Der Faserverbundwerkstoff wird verfestigt und insbesondere ausgehärtet und es werden die Ringsegmente und die Formeinrichtungen entfernt und die Felge wird entnommen.

Damit ist die Felge im Wesentlichen fertiggestellt. Anschließend kann gegebenenfalls die Einbringung von Speichenlöchern erfolgen.

Das erfindungsgemäße Verfahren hat viele Vorteile. Ein erheblicher Vorteil des erfindungsgemäßen Verfahrens ist, dass die im bestimmungsgemäßen Betrieb äußeren Sichtflächen (unmittelbar) durch die Formeinrichtungen geformt und gebildet werden, auf die jeweils erste Faserlagen aufgelegt werden. Dadurch kann eine homogene, reproduzierbare und vollflächige Anlage der Faserlagen an die Formeinrichtungen der Werkzeugeinrichtung gewährleistet werden.

Dadurch, dass sich die vollständige sichtbare äußere Oberfläche der fertigen Felge durch unmittelbar an den Formeinrichtungen der Werkzeugeinrichtung anliegenden Flächen ergibt, kann die Oberflächenqualität der Felgenflanken und damit wenigstens der Außenseiten Seitenwände erheblich verbessert werden. Es kann die Anzahl von Lufteinschlüssen und anderen Defekten stark reduziert werden, sodass die Ausschussquote deutlich reduziert werden kann. Der Prozess ist weniger fehleranfällig. Auch ein Faserverzug an den Faserlagen kann verringert und weitgehend vermieden werden, wodurch die Qualität und die Stabilität der derart hergestellten Felge steigen. Die Lage und Orientierung der Fasern in den äußeren Faserlagen ist jederzeit definiert, was die Stabilität und die Optik verbessert.

Durch die verbesserte Optik der hergestellten Felge ergibt sich somit die Möglichkeit, die Felge aus der Form heraus (englisch: "Out of the Mold") herzustellen. Durch die klar definierte Form und Lage der Faserlagen und der Fasern darin, können Fehlstellen in der ausgehärteten Felge stark verringert werden.

Im Stand der Technik sind hingegen Verfahren bekannt, bei denen zunächst Faserlagen in ein Hilfswerkzeug eingelegt werden. Ein so vorgeformtes Faserlagenbündel wird dann in die eigentliche Werkzeugform übertragen und dort eingelegt. Bei der Übertragung der Faserlagen können sich einzelne Fasern und Faserlagen verschieben, sodass die Lage und Form der einzelnen Faserlagen nicht immer reproduzierbar ist. Das Verfahren wird aber unter anderem deshalb bislang so durchgeführt, da die eigentliche Werkzeugform so schwer ist, dass sie nicht ohne Weiteres durch eine Person oder mehrere Personen) manuell transportierbar ist. Bei der Erfindung sind die einzelnen Teile der Werkzeugeinrichtung hingegen jeweils problemlos separat durch eine einzelne Person transportierbar. Deshalb kann das Auflegen jedenfalls der Sichtlagen und auch von den Verstärkungslagen direkt in die Form erfolgen.

Insbesondere bilden die beiden Formeinrichtungen zusammen die Außenform der Felgenflanken und des Felgenbodens vollständig aus. Besonders bevorzugt werden die beiden Formeinrichtungen an einer Ebene zusammengefügt, die senkrecht zu einer Symmetrieachse der Felge ausgerichtet ist. Insbesondere treffen sich die beiden Formeinrichtungen an der tiefsten Stelle des Felgenbodens. Die tiefste Stelle des Felgenbodens ist die Stelle, die radial am Weitesten nach innen ragt. Insbesondere ist die Felge bauchig ausgebildet. Die Felge kann ein V- oder U-Form aufweisen. Vorzugsweise liegt eine breitestete Stelle der Felge zwischen dem radialen äußeren Ende der Felge (an den Felgenhörnern) und einem radiale inneren Ende an dem Felgenbett.

Vorzugsweise werden die Faserlagen in die Werkzeugeinheiten eingelegt und die an der fertigen Felge sichtbaren Außenlagen werden direkt an die Werkzeugeinheiten angedrückt. Vorzugsweise bilden die jeweiligen Formeinrichtungen jeweils vollständig den sichtbaren Bereich der Felgenflanken aus. Die Ringeinrichtung bildet vorzugsweise den sichtbaren Bereich des Felgenbettes aus.

In einer bevorzugten Weiterbildung werden die Faserlagen an die Formeinrichtungen der Werkzeugeinrichtung angedrückt, um einen vollflächigen Kontakt zwischen den Faserlagen und den Flankenkontaktflächen zu gewährleisten. Dadurch können Lufteinschlüsse und Fehlstellen vermieden und somit die Qualität erhöht werden.

In besonders bevorzugten Weiterbildungen werden alle Faserlagen, die als Sichtlagen im bestimmungsgemäßen Gebrauch die sichtbaren Außenflächen bilden, an die Formeinrichtungen und die Ringeinrichtung der Werkzeugeinrichtung angedrückt, um einen vollflächigen Kontakt zwischen den Faserlagen und den Flankenkontaktflächen (bzw. den Seitenflächenkontaktflächen) zu gewährleisten. Dadurch können Struktur und Qualität verbessert werden.

Ein Nacharbeiten der sichtbaren Oberfläche und insbesondere ein Nachlackieren der äußeren Oberfläche zur Verdeckung von Lufteinschlüssen und anderen Fehlstellen kann vermieden werden. Dadurch ergibt sich ein besonders vorteilhaftes Verfahren. Dadurch, dass eine Nachlackierung der sichtbaren Oberflächen nicht nötig ist, kann ein weiterer Verfahrensschritt eingespart werden, wodurch die Kosten reduziert werden. Ein anderer erheblicher Vorteil ist, dass das Gesamtgewicht der Felge reduziert werden kann, da das Gewicht für die aufgetragene Schicht entfällt.

Erfindungsgemäß wird das Hilfsformteil der Werkzeugeinrichtung verwendet. Dabei wird ein zu der ausgewählten Formeinrichtung passendes Hilfsformteil der Werkzeugeinrichtung mit der zuvor ausgewählten Formeinrichtung verbunden, sodass die (ausgewählte) Formeinrichtung zusammen mit dem Hilfsformteil eine um eine Symmetrieachse der Felge umlaufende (gemeinsame) Formfläche für den Felgenboden bildet. Die Formfläche für den Felgenboden wird bereichsweise auf der ausgewählten Formeinrichtung und bereichsweise auf dem Hilfsformteil ausgebildet.

Dabei wird die erste Faserlage nicht nur auf die Flankenkontaktfläche der ausgewählten Formeinrichtung aufgebracht, sondern die erste Faserlage wird (einstückig) auch auf den Felgenbodenbereich des Hilfsformteils aufgebracht, um im Bereich des Felgenbodens eine durchgängige erste Faserlage zu bilden. Diese durchgängige erste Faserlage erstreckt sich nicht nur über den Felgenbodenbereich der (ausgewählten) Formeinrichtung, sondern auch über den Felgenbodenbereich bzw. Felgenbodenformbereich des Hilfsformteils. So wird die erste Faserlage vorzugsweise durchgehend auf die Flankenkontaktfläche der ausgewählten Formeinrichtung und auf den Felgenbodenbereich des Hilfsformteils aufgebracht, sodass im Bereich des Felgenbodens eine durchgängige und einstückige erste Faserlage zur Verfügung gestellt wird. Durch diese Weiterbildungen wird eine besonders stabile und hochwertige Felge hergestellt.

Das Hilfsformteil wird anschließend von der ausgewählten Formeinrichtung entfernt und es werden (unmittelbar danach oder vorzugsweise später) die beiden mit Faserlagen belegten Formeinrichtungen miteinander verbunden. Das Entfernen des Hilfsformteils erfolgt insbesondere so vorsichtig, dass die drapierten Faserlagen in dem Bereich des Felgenbodens (in etwa oder wenigstens im Wesentlichen) ihre Form behalten. Die im Bereich des Felgenbodens von der ausgewählten Formeinrichtung überstehenden Abschnitte der Faserlagen bilden zusammen mit den auf die andere Formeinrichtung aufgelegten Faserlagen die andere Felgenflanke. Die "überstehenden" Abschnitte bilden aber an der fertigen Felge keine Sichtfläche aus.

Es ist bevorzugt, dass nach dem Entfernen des Hilfsformteils zunächst die Ringeinrichtung angelegt wird, und dass danach die andere Formeinrichtung angelegt wird.

In einfachen Ausgestaltungen wird die ausgewählte Formeinrichtung zum Belegen mit Faserlagen auf einen zum Beispiel horizontalen Tisch gelegt und es wird die erste Faserlage und es werden gegebenenfalls weitere Faserlagen auf die Flankenkontaktfläche der ausgewählten Formeinrichtung und gegebenenfalls das Hilfsformteil aufgelegt und an die jeweiligen Kontaktflächen angedrückt. Parallel oder danach oder davor wird die andere Formeinrichtung beispielsweise auf einen z. B. horizontalen Tisch aufgelegt und es wird die andere Formeinrichtung mit einer ersten Faserlage belegt und es werden gegebenenfalls weitere Faserlagen auf die andere Formeinrichtung aufgelegt.

Parallel dazu oder davor oder danach kann die Ringeinrichtung mit den entsprechenden Faserlagen belegt werden. Nach dem Entfernen des Hilfsformteils wird die Ringeinrichtung mit den auf die Felgenbettkontaktfläche aufgebrachten Faserlagen auf die ausgewählte Formeinrichtung aufgelegt. Anschließend bzw. danach kann die andere Formeinrichtung mit den aufgelegten Faserlagen auf die ausgewählte Formeinrichtung und die Ringeinrichtung aufgelegt werden. Bei dieser Ausgestaltung werden die Formeinrichtungen jeweils schrittweise auf einen horizontalen Tisch aufgelegt. Möglich ist es aber auch, dass der Tisch unter einem Winkel zur Horizontalen geneigt angeordnet ist, oder, dass die Formeinrichtungen senkrecht im Raum positioniert werden und die Faserlagen von der Seite an die entsprechenden Formeinrichtungen angedrückt werden.

In bevorzugten Weiterbildungen bildet die auf die ausgewählte Formeinrichtung aufgebrachte erste Faserlage im Bereich der Flankenkontaktfläche die Sichtlage mit der Sichtfläche der zugehörigen Felgenflanke und im Felgenbodenbereich des Hilfsformteils eine Verstärkungslage des Felgenbodens und nicht die Sichtlage mit der Sichtfläche der anderen Felgenflanke. Dadurch wird eine vorteilhafte Verbindung der beiden Hälften erreicht. Die beiden Hälften der Felge können symmetrisch oder asymmetrisch ausgebildet sein.

Vorzugsweise wird der sichtbare Felgenboden durch die radial inneren Bereiche der Felgenflanken bzw. durch die radial inneren Bereiche der ersten Faserlagen gebildet, die auf die ausgewählte Formeinrichtung bzw. die andere Formeinrichtung aufgebracht werden.

In vorteilhaften Ausgestaltungen weisen die beiden Formeinrichtungen und das Hilfsformteil jeweils eine senkrecht zu einer Symmetrieachse der Felge verlaufende Trennfläche auf. An der Trennfläche können die Formeinrichtungen und das Hilfsformteil jeweils wahlweise aneinander angelegt werden. So wird vorzugsweise zunächst das Hilfsformteil an die ausgewählte Formeinrichtung angelegt und nach dem Auflegen der entsprechenden Faserlagen wieder entfernt. Anschließend wird die andere Formeinrichtung mit der zugehörigen Trennfläche an die Trennfläche der ausgewählten Formeinrichtung angelegt.

Vorzugsweise wird in die miteinander verbundenen Formeinrichtungen wenigstens eine Verstärkungslage (wenigstens in dem Bereich des Felgenbodens) eingebracht.

Denkbar ist ein Verfahren auch ohne den Einsatz eines Hilfsformteils. Dann werden die Formeinrichtungen zunächst jeweils getrennt mit jeweils ersten Faserlagen als Sichtlagen belegt. Anschließend können die beiden Formeinrichtungen zusammengefügt werden und es kann radial von außen auf den Felgenboden wenigstens eine Verstärkungs- oder Verbindungslage aufgelegt werden. Im Anschluss daran könnten einzelne mit Faserlagen belegte Ringsegmente von außen eingeschoben werden, die anschließend vorsichtig entfernt werden, wobei die darauf aufgelegten Faserlagen zurückbleiben. Es könnte dann anschließend eine umlaufende äußere Faserlage aufgelegt werden und die Ringsegmente wieder eingeführt und zu der Ringeinrichtung verbunden werden. Im Anschluss kann eine Aushärtung erfolgen.

Besonders bevorzugt ist eine Reihenfolge der Verfahrensschritte, bei der auf die ausgewählte Formeinrichtung das Hilfsformteil aufgelegt wird, nach dem Aufbringen erster Faserlagen das Hilfsformteil entfernt und die Ringeinrichtung mit den zuvor darauf aufgelegten Faserlagen aufgelegt wird. Schließlich wird die andere Formeinrichtung mit den darauf aufgebrachten bzw. aufgelegten Faserlagen aufgelegt.

In allen Ausgestaltungen ist es bevorzugt, dass Felgenhörner an den beiden Felgenflanken ausgebildet werden. Insbesondere wird wenigstens ein Felgenhorn wenigstens teilweise durch Faserlagen gebildet, welche auf eine der Formeinrichtungen und auf die Ringeinrichtung aufgebracht sind. Das bedeutet, dass vorzugsweise ein Felgenhorn sowohl durch auf eine Formeinrichtung aufgebrachte Faserlagen als auch durch auf die Ringeinrichtung aufgebrachte Faserlagen gebildet wird. Das erhöht die Stabilität.

In vorteilhaften Weiterbildungen wird in dem Kreuzungsbereich von dem Felgenbett und der Felgenflanke wenigstens ein Faserstrang zur Verstärkung eingelegt. Ein solcher Faserstrang kann aus einer Mehrzahl von Filamenten oder aus einem Bündel von Filamenten bestehen oder solche Filamente umfassen. Möglich ist es auch, dass zum Beispiel zu einem Zopf geflochtene Filamente oder zu einer Schnur verbundene oder um einander gedrehte Filamente als Faserstrang eingesetzt werden. Solche eingelegten Faserstränge können die Kreuzungsbereiche von Felgenbett und Felgenflanke und dem Felgenhorn verstärken.

In allen Ausgestaltungen ist es bevorzugt, dass die Ringeinrichtung in Umfangsrichtung wenigstens zwei und insbesondere drei oder mehr Ringsegmente umfasst. Besonders bevorzugt sind in Umfangsrichtung drei Ringsegmente vorhanden. Möglich ist es auch, nur zwei Ringsegmente zu verwenden, die sich dann über einen Winkel von jeweils 180° erstrecken. Bevorzugt werden drei Ringsegmente verwendet, sodass sich jedes einzelne Ringsegment über einen Umfangswinkel von deutlich kleiner als 180° erstreckt. Bevorzugt sind die Ringsegmente gleich ausgestaltet, sodass bei drei Ringsegmenten jedes vorzugsweise ein Winkelbereich von 120° abdeckt. Denkbar ist auch, dass die einzelnen Ringsegmente sich über unterschiedliche Winkelbereiche erstrecken. Insgesamt erstrecken sich die Ringsegmente über den vollständigen Umfang.

Vorzugsweise umfasst die Ringeinrichtung in axialer Richtung (parallel zur Symmetrieachse der Felge) quer zu der Umfangsrichtung wenigstens zwei und insbesondere drei oder mehr Ringsegmente. So ist es möglich, dass die Ringeinrichtung insgesamt aus neun Ringsegmenten besteht. Jeweils drei Ringsegmente ergeben einen Ring. Die drei Ringe (mit jeweils drei Ringsegmenten) sind in axialer Richtung nacheinander angeordnet. Die Ringsegmente können in axialer Richtung versetzt zueinander angeordnet sein. Die Ringsegmente bilden insgesamt die Ringeinrichtung, die radial innen die Felgenbettkontaktfläche ausbildet.

Die axial mittleren Ringsegmente können insbesondere keilförmig ausgebildet sein. Dadurch wird es möglich, dass die mittleren Ringsegmente nach der Herstellung zunächst entnommen werden können. Anschließend können die anderen Ringsegmente entnommen werden, die beispielsweise einen Hinterschnitt an den Felgenhörnern ausbilden, um radial nach innen überstehende Enden der Felgenhörner zur Verfügung zu stellen.

Denkbar ist es aber auch, dass die axial mittleren Ringsegmente insgesamt einen scheibenförmigen Ring und keine Keilform ausbilden. Auch dann können die axial äußeren Ringsegmente einen Hinterschnitt an den Felgenhörnern ausbilden.

In vorteilhaften Ausgestaltungen ist ein Schließring vorgesehen, der außen um die miteinander verbundenen Formeinrichtungen und die Ringeinrichtung gelegt wird. Der Schließring kann radial von außen angelegt werden und den Zusammenhalt der Komponenten untereinander verstärken. Der Schließring kann insofern auch als äußerer Klemmring bezeichnet werden. Möglich ist es auch, dass auf einen Schließring verzichtet wird, insbesondere wenn die Formeinrichtungen und die Ringeinrichtung anderweitig miteinander verbunden werden.

Vorzugsweise wird die mit den Faserlagen bestückte Werkzeugeinrichtung vor dem Aushärten evakuiert. Besonders bevorzugt wird die Werkzeugeinrichtung in eine Presseinrichtung eingebracht und/oder beheizt. Dadurch kann die Verfestigung bzw. das Aushärten des Faserverbundwerkstoffs unterstützt werden.

In allen Ausgestaltungen ist es besonders bevorzugt, dass mit wenigstens einem Harz getränkte Faserlagen verwendet werden. Solche mit Matrixmaterial (insbesondere Harz) versehenen oder getränkten Faserlagen können auch als Prepregs bezeichnet werden und weisen vorzugsweise eine zur Aushärtung (wenigstens im Wesentlichen) genügende Menge an Matrixmaterial (und vorzugsweise an Harz) auf. Besonders vorteilhaft ist der Einsatz von Prepregs. Denkbar ist es auch, dass Matrixmaterial oder Harzmaterial in die fertig bestückte Werkzeugeinrichtung (zusätzlich) eingebracht wird. Beispielsweise kann Matrixmaterial oder Harzmaterial eingespritzt oder eingesaugt werden. Möglich ist es auch, dass Faserlagen, Fasermatten, Gewebematten oder dergleichen als Prepregs verwendet werden und zusätzlich noch (etwas) Harzmaterial eingebracht wird.

In allen Ausgestaltungen ist es bevorzugt, dass ein aufblasbarer Schlauch (in den Bereich der späteren Hohlkammer) eingelegt wird, bevor die Formeinrichtungen mit der Ringeinrichtung verbunden werden. Vorzugsweise wird der Schlauch nach dem Befestigen der Formeinrichtungen mit der Ringeinrichtung aufgeblasen. Eine Verbindung nach außen zum Aufblasen bildet zum Beispiel die spätere Ventilöffnung. Dadurch kann der Schlauch später entnommen werden.

Es ist bevorzugt, dass nach der Entnahme der Felge aus der Werkzeugeinrichtung Speichenlöcher eingebracht werden.

Vorzugsweise werden bei dem Verfahren zur Herstellung einer Felge für wenigstens teilweise muskelbetriebene Fahrzeuge und insbesondere Fahrräder Faserlagen in Werkzeugeinheiten eingelegt . Dabei werden die an der fertigen Felge sichtbaren Außenlagen direkt an die Werkzeugeinheiten angedrückt. Dadurch kann eine vorteilhafte Felge hergestellt werden, bei der keine und jedenfalls keine wesentlichen Nacharbeiten (der Sichtfläche der) äußeren Felge nötig werden.

Eine mit dem erfindungsgemäßen Verfahren hergestellte Felge für wenigstens teilweise muskelbetriebene Fahrzeuge und insbesondere Fahrräder weist gegenüberliegende Felgenflanken, ein Felgenbett und einen Felgenboden auf, an dem sich im radial innersten Punkt die Felgenflanken treffen. Die Felge wird hergestellt aus wenigstens einem Faserverbundwerkstoff mit einem Verfahren, wie es zuvor beschrieben wurde. In einer bevorzugten Weiterbildung besteht die im bestimmungsgemäßen Betrieb sichtbare äußere Oberfläche wenigstens überwiegend oder vollständig aus dem wenigstens einen Faserverbundwerkstoff. Das gilt abgesehen von etwaigen Felgenösen und Typangaben und z. B. im Vergleich zur Felgenoberfläche kleinen Aufklebern, wobei der Faktor der Fläche von zum Beispiel Aufklebern zur Felgenoberfläche kleiner 1/5 oder 1/10 oder 1/100 beträgt.

Die derart hergestellte Felge ist sehr vorteilhaft und bietet auch ohne Nachbearbeitung der äußeren Oberfläche und insbesondere ohne Lackierung der äußeren Oberfläche eine hohe Oberflächengüte und eine reproduzierbare und hohe Qualität.

Die erfindungsgemäße Werkzeugeinrichtung dient zur Herstellung einer Felge für wenigstens teilweise muskelbetriebene Fahrzeuge und insbesondere Fahrräder, wobei die Felge gegenüberliegende Felgenflanken, ein Felgenbett und einen Felgenboden aufweist, an dem sich insbesondere im radial innersten Punkt die Felgenflanken treffen. Die Werkzeugeinrichtung umfasst zwei Formeinrichtungen und eine Ringeinrichtung. Die Formeinrichtungen weisen jeweils Kontaktflächen zur Ausbildung jeweils einer Felgenflanke auf. Die Ringeinrichtung umfasst eine Mehrzahl umfänglich zusammengesetzter Ringsegmente. Die Ringeinrichtung weist im radial inneren Bereich eine Kontaktfläche zur Ausbildung des Felgenbettes auf.

Die Werkzeugeinrichtung ist sehr vorteilhaft und bietet die Möglichkeit der Herstellung von hochwertigen und reproduzierbaren Felgen insbesondere für Fahrräder.

Besonders bevorzugt bestehen die Formeinrichtungen und/oder die Ringeinrichtung aus einem Leichtmetall und sind insbesondere spanend gefertigt und/oder bearbeitet. Vorzugsweise sind die Formeinrichtungen und/oder deren Einheiten an den Kontaktflächen mit der herzustellenden Felge poliert. Das erhöht noch einmal die Qualität der herzustellenden Felge.

Die Ringeinrichtung kann insbesondere eine Ringeinheit (mit einem Kern) aus einem weniger elastischen Material und wenigstens einen Ringüberzug aus einem stärker elastischen Material umfassen. Der Ringüberzug bildet dann die Kontaktfläche oder wenigstens einen Teil der Kontaktfläche zur Ausbildung des Felgenbettes aus. Insbesondere bestehen die Formeinrichtungen auch aus einem weniger elastischen Material als der Ringüberzug. Dadurch kann der Ringüberzug elastisch nachgeben und den nötigen Druck auf die Felgenhörner und/oder das Felgenbett aufbauen und weitergeben. Der Ringüberzug besteht insbesondere wenigstens zum Teil aus einem gummielastischen oder gummiartigen Werkstoff. Der Ringüberzug besteht besonders bevorzugt wenigstens zum Teil oder im Wesentlichen oder nahezu vollständig oder vollständig aus einem Silikonwerkstoff. Möglich ist (auch) die Verwendung von Silikonelastomeren, Polyurethanen oder wenigstens einem Silikonkautschuk. Die Ringeinheit (bzw. der Kern) besteht vorzugsweise im Wesentlichen oder (nahezu) vollständig aus wenigstens einem metallischen Werkstoff. Praktisch bildet die Ringeinheit einen weniger elastischen (oder härteren) Kern mit einem elastischeren Ringüberzug daran.

Insbesondere umfasst die Werkzeugeinrichtung wenigstens ein Hilfsformteil, welches zusammen mit einer der Formeinrichtungen eine Formfläche für den Felgenboden ausbildet. Möglich ist es auch, dass für beide Formeinrichtungen jeweils ein Hilfsformteil zur Verfügung gestellt wird. Dann kann wahlweise eine der Formeinrichtungen mit dem zugehörigen Hilfsformteil verwendet werden.

Es ist möglich und bevorzugt, dass die Formeinrichtungen und/oder die Ringeinrichtung und/oder das Hilfsformteil miteinander korrespondierende Ausrichteinheiten aufweisen. Darüber kann eine Ausrichtung der einzelnen Formeinrichtungen und der Ringeinrichtung bzw. des Hilfsformteils zueinander reproduzierbar sichergestellt werden. Zur Befestigung der Formeinrichtungen und der Ringeinrichtung bzw. des Hilfsformteils aneinander sind insbesondere entsprechende Befestigungsmittel vorgesehen, die an entsprechende Befestigungsöffnungen oder an den Ausrichteinheiten montiert werden können. Beispielsweise können Schrauben, Stifte, Nieten, Klemmen oder Rastteile oder dergleichen als Befestigungsmittel eingesetzt werden.

In allen Ausgestaltungen ist es bevorzugt, dass die Formeinrichtungen und die Ringeinrichtung jeweils ein Gewicht kleiner 35 Kilo und insbesondere kleiner 30 Kilo oder kleiner 25 Kilo und besonders bevorzugt, kleiner 20 Kilo oder 15 Kilo aufweisen. Insbesondere weist wenigstens eine Formeinrichtung ein Gewicht kleiner 15 oder kleiner 12 oder kleiner 10 kg auf. Vorzugsweise weisen die beiden Formeinrichtungen und die Ringeinrichtung im zusammengebauten Zustand ein Gesamtgewicht kleiner 35 Kilo oder kleiner 30 Kilo oder sogar kleiner 20 Kilo auf. Dadurch würde es einer Person ermöglicht, die einzelnen Einheiten und die Werkzeugeinrichtung insgesamt auch allein und ohne fremde Hilfe zu bewegen. Jedenfalls ist eine bequeme Handhabung zu zweit möglich. Das erleichtert die Herstellung.

Dadurch, dass die Werkzeugeinrichtung kompakte Formeinrichtungen und eine kompakte Ringeinrichtung umfasst, die als Dreh- oder Frästeil hergestellt werden, sinken die Fertigungskosten für eine Werkzeugeinrichtung ganz erheblich. Dadurch wird es ermöglicht, eine größere Anzahl von Werkzeugeinrichtungen für eine parallele Produktion einzusetzen. Es können bei geringeren Kosten Felgen mit höherer Qualität hergestellt werden, welche zudem nur eine sehr geringe oder gar keine Nacharbeit der Sichtflächen benötigen.

Weitere Vorteile und Merkmale der vorliegenden Erfindung ergeben sich aus den Ausführungsbeispielen, die im Folgenden mit Bezug auf die beiliegenden Figuren erläutert werden.

In den Figuren zeigen:
- Figur 1: eine schematische Darstellung eines Mountainbikes mit anmeldungsgemäßen Felgen;
- Figur 2: eine schematische Darstellung eines Rennrades mit anmeldungsgemäßen Felgen;
- Figur 3: eine schematische Gesamtansicht einer anmeldungsgemäßen Werkzeugeinrichtung zur Herstellung einer anmeldungsgemäßen Felge;
- Figur 4: eine Explosionsdarstellung der verschiedenen Komponenten der Werkzeugeinrichtung nach Figur 3;
- Figur 5: eine Formeinrichtung und ein Hilfsformteil der Werkzeugeinrichtung nach Figur 4;
- Figur 6: zwei geschnittene Darstellungen der Werkzeugeinrichtung bei der Herstellung einer Felge;
- Figur 7: eine fertige anmeldungsgemäße Felge;
- Figur 8: geschnittene Darstellungen der Werkzeugeinrichtung und der Faserlagen einer Felge bei der Durchführung des anmeldungsgemäßen Verfahrens;
- Figuren 9-12: verschiedene Schnittdarstellungen bei der Herstellung anmeldungsgemäßer Felgen; und
- Figur 13: eine schematische Draufsicht auf die Ringeinrichtung der Werkzeugeinrichtung nach Figur 3.

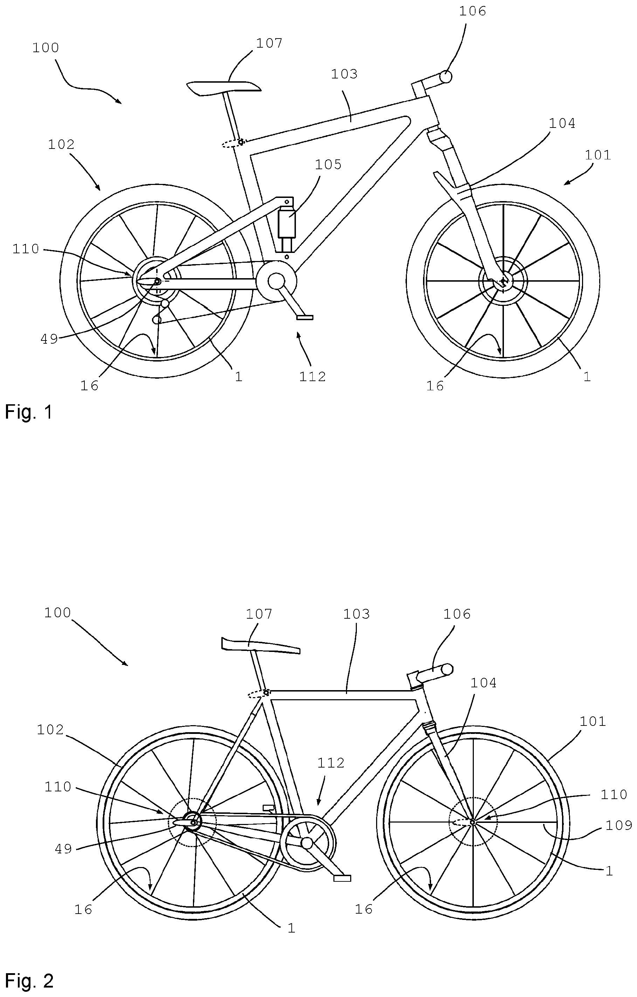

In den Figuren 1 und 2 sind jeweils ein Mountainbike bzw. ein Rennrad 100 dargestellt, die jeweils mit anmeldungsgemäßen Felgen 1 ausgerüstet sind. Das Mountainbike bzw. Rennrad 100 verfügt jeweils über ein Vorderrad 101 und ein Hinterrad 102, an denen jeweils anmeldungsgemäße Felgen 1 eingesetzt sind. Die beiden Räder 101, 102 verfügen über Speichen 109, um die Felge 1 mit den Naben 110 zu verbinden. An der Felge 1 sind dazu Speichenlöcher 16 vorgesehen.

Ein Rad 100 verfügt über einen Rahmen 103, einen Lenker 106, einen Sattel 107, eine Gabel bzw. Federgabel 104 und im Falle des Mountainbikes kann ein Hinterraddämpfer 105 vorgesehen sein. Zum Antrieb dient eine Tretkurbel 112 mit Pedalen. Gegebenenfalls kann ein elektrischer Hilfsantrieb an der Tretkurbel 112 und oder den Rädern vorgesehen sein. Die Nabe 110 der Räder kann jeweils über ein Spannsystem 49 (zum Beispiel eine Steckachse oder einen Schnellspanner) an dem Rahmen befestigt sein.

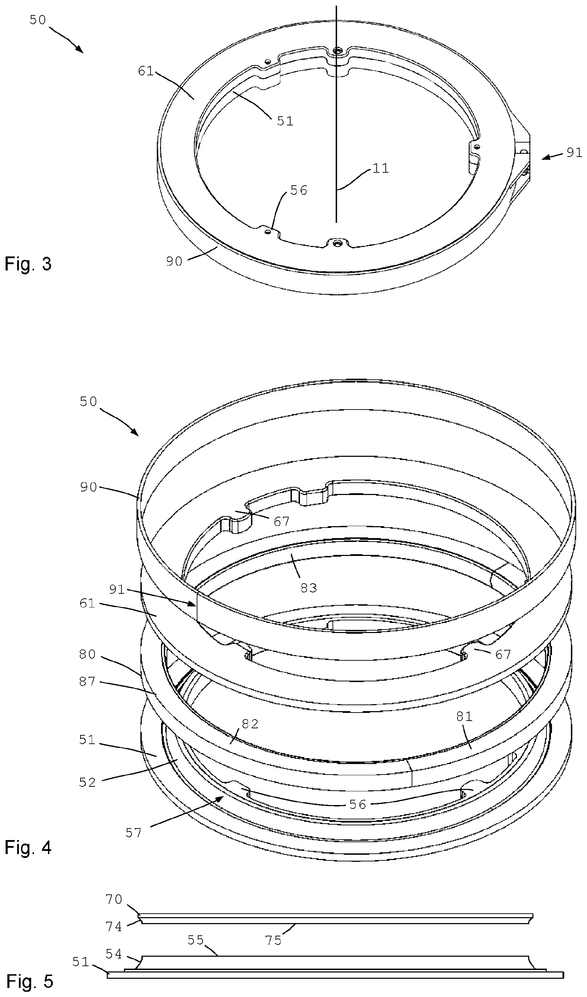

Figur 3 zeigt die Werkzeugeinrichtung 50 im zusammengebauten Zustand mit schon eingelegten Faserlagen zur Herstellung der Felge 1, bevor die Werkzeugeinrichtung 50 in eine separate Presseinrichtung eingelegt wird, in der die Werkzeugeinrichtung 50 auch beheizt wird, um das Aushärten des Faserverbundwerkstoffs zu beschleunigen. Die Werkzeugeinrichtung 50 ist im Wesentlichen rotationssymmetrisch um eine Symmetrieachse 11 ausgebildet, die jedenfalls eine Symmetrieachse für die fertige Felge 1 bildet.

Figur 4 zeigt eine Explosionsdarstellung der Werkzeugeinrichtung 50, wobei zuoberst ein Schließring 90 abgebildet ist, der über einen Klemmabschnitt 91 und eine hier nicht sichtbare Schraube verfügt. Der Schließring 90 kann um die weiteren Komponenten der Werkzeugeinrichtung 50 gelegt werden und kann als Klemmring dienen. Gegebenenfalls kann auf diesen Schließring 90 verzichtet werden.

Als unterstes Element ist eine Formeinrichtung 51 zu sehen, die eine Flankenkontaktfläche 52 aufweist, die zur Ausbildung einer der beiden Felgenflanken der herzustellenden Felge 1 dient. An der Formeinrichtung 51 sind Befestigungsmittel 56 und Ausrichteinheiten 57 ausgebildet oder angeordnet, mit der die Formeinrichtung 51 mit der Ringeinrichtung 80 und der anderen Formeinrichtung 61 über entsprechende Befestigungsmittel 56 oder an den Ausrichteinheiten 57 befestigt wird. Die Ringeinrichtung weist Ausrichteinheiten 87 und die andere Formeinrichtung 61 weist Ausrichteinheiten 67 auf.

Wie in Figur 4 zu erkennen, besteht die Ringeinrichtung 80 aus mehreren Ringsegmenten 81-83 die sich in Umfangsrichtung um die zentrale Symmetrieachse 11 herum erstrecken. Dadurch können die Ringsegmente bei der Entnahme einzeln entnommen werden.

Figur 5 zeigt eine Formeinrichtung 51 und das zugehörige Hilfsformteil 70, die miteinander verbunden werden, um die Flankenkontaktfläche 72 und die Felgenbodenbereiche 54 und 74 mit Faserlagen des Faserverbundwerkstoffs zu belegen. Dadurch wird der Bereich des Felgenbodens durch eine gemeinsame durchgehende Lage verstärkt.

Die Formeinrichtung 61 und das Hilfsformteil 70 werden an den Trennflächen 55 und 75 miteinander verbunden bzw. aufeinandergelegt.

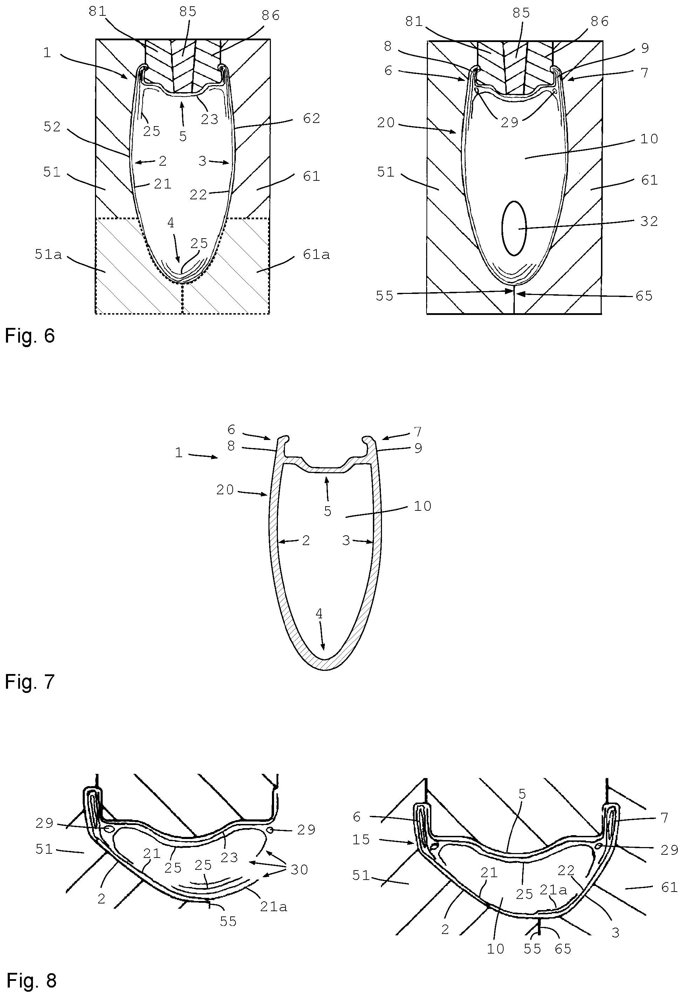

Figur 6 zeigt zwei schematische Darstellungen der Werkzeugeinrichtung 50 mit darin angeordneten Faserlagen 21-23 und 25. Die Werkzeugeinrichtung besteht im zusammengebauten Zustand im Wesentlichen aus einer ersten Formeinrichtung 51, einer zweiten Formeinrichtung 61 und der Ringeinrichtung 80, die wiederum (in Umfangsrichtung) aus mehreren Ringsegmenten 81-83 (vergleiche Figur 4) und (in axialer Richtung) Ringsegmenten 85, 86 besteht.

Gegebenenfalls können die Formeinrichtungen 51 und 61 auch mehrteilig ausgebildet sein und beispielsweise zusätzlich Formteile 51a und 61a umfassen. Vorzugsweise sind die Formeinrichtungen 51 und 61 aber jeweils einteilig ausgebildet. Die Formeinrichtung 51 weist eine Flankenkontaktfläche 52 für die linke Felgenflanke 2 auf, während die rechte Felgenflanke 3 durch eine Flankenkontaktfläche 62 geformt wird. Auf die Flankenkontaktflächen 52 bzw. 62 sind Faserlagen 21 bzw. 22 aufgelegt. Im Bereich des Felgenbodens 4 sind noch Verstärkungslagen 25 aufgebracht. Das Felgenbett 5 wird durch wenigstens einer Faserlage 23 gebildet, die radial innen auf die Ringeinrichtung 80 aufgetragen wird.

Die beiden in Figur 6 dargestellten Felgen 1 verfügen jeweils über Felgenhörner 6, 7, die durch Faserlagen 21, 23 und 25 ausgebildet werden. Die später von außen seitlich sichtbaren Außenflächen 8 bzw. 9 der beiden Felgenflanken 2, 3 werden jeweils durch die erste auf die Flankenkontaktfläche 52 aufgelegte Faserlage 21 bzw. durch die erste auf die Flankenkontaktfläche 62 aufgelegte erste Faserlage 22 gebildet. Der Sichtbereich des Felgenbettes wird durch die erste Faserlage 23 geformt, die auf die Ringeinrichtung 80 aufgelegt wurde.

Alle Sichtflächen bzw. alle Sichtlagen der fertigen Felge 1 werden somit durch die Faserlagen 21-23 zur Verfügung gestellt, die jeweils separat und vollflächig auf die Formeinrichtungen 51 bzw. 61 und die Ringeinrichtung 80 aufgelegt werden. Dadurch kann eine besonders hohe Oberflächenqualität erreicht werden, da Lufteinschlüsse oder sonstige Fehlstellen besser vermieden können, als im Stand der Technik.

Um von innen während des Aushärtens Druck ausüben zu können, wird regelmäßig ein (nur schematisch eingezeichneter) Schlauch 32 eingelegt, der über die spätere Ventilöffnung nach außen geführt werden kann und der nach dem Schließen der Werkzeugform (Werkzeugeinrichtung 50) mit Druck beaufschlagt werden kann, um die einzelnen Faserlagen 21-25 von innen gegen die Innenwandungen der Werkzeugeinrichtung 50 zu pressen. Dadurch kann ein zuverlässiger Verbund gesichert werden. Der Schlauch 32 kann elastisch ausgebildet sein und sich beim Aufpumpen ausdehnen. Möglich und bevorzugt ist es auch, dass der Schlauch 32 groß genug oder passend groß ausgebildet ist und beim Einlegen vollflächig auf wenigstens eine Flankenkontaktfläche und radial von innen vollflächig auf die Ringeinrichtung aufgelegt wird.

Gegebenenfalls ist es möglich, wie in dem rechten Teil von Figur 6 zu erkennen, dass umlaufende Faserstränge oder Faserbündel 29 in dem Schnittbereich von Felgenflanke 2, 3 und Felgenbett 5 eingelegt werden, um die Bereiche dort zu verstärken und noch stabiler zu gestalten.

Figur 7 zeigt eine schematische Darstellung einer fertigen Felge 1, die einen Felgenboden 4, ein Felgenbett 5 und Felgenflanken 2, 3 mit daran ausgebildeten Felgenhörnern 6, 7 umfasst. Im Inneren ist eine Hohlkammer 10 zu sehen. Die Felge 1 wird mit einem anmeldungsgemäßen Verfahren und einer anmeldungsgemäßen Werkzeugeinrichtung aus wenigstens einem Faserverbundwerkstoff hergestellt.

Figur 8 zeigt zwei schematische Darstellungen bei der Herstellung. Dargestellt ist jeweils eine stark schematische Darstellung der Faserlagen in einer Werkzeugeinrichtung 50, wobei der Verlauf und die Lage der Faserlagen 21-23 und 25 absichtlich grob skizziert sind, um den Verlauf der einzelnen Faserlagen anschaulich zu erläutern. Hier ist in der rechten Abbildung von Figur 8 erkennbar, dass die Faserlage 21 nicht nur auf die Flankenkontaktfläche 52 der Formeinrichtung 51 aufgelegt wurde, sondern auch auf den Felgenbodenbereich 74 des Hilfsformteils 70, um in dem Bereich der Felgenbettkontaktfläche 62 der anderen Formeinrichtung 61 einen Verstärkungsabschnitt 21a zu bilden. Dadurch wird im Bereich des Felgenbodens ein Überlapp der einzelnen Faserlagen von der einen Felgenflanke zu der anderen Felgenflanke ermöglicht.

Es sind schematisch umlaufende Faserstränge 29 in dem Kreuzungsbereich 15 von den Felgenhörnern 6, 7 mit dem Felgenbett 5 bzw. den Felgenflanken 2, 3 zu erkennen.

Im unteren Bereich sind die Trennflächen 55 und 65 der beiden Formeinrichtungen 51 und 61 zu erkennen, an denen die beiden Formeinrichtungen 51 und 61 aneinandergefügt werden.

Figur 8 zeigt links eine Vorstufe bei der Fertigung der weiter rechts abgebildeten Felge 1. In Figur 8 ist in der linken Abbildung der Zustand dargestellt, nachdem die ausgewählte Formeinrichtung 51 mit dem Hilfsformteil 70 verbunden und darauf Faserlagen 21 und Verstärkungslagen 25 aufgelegt wurden und nachdem anschließend das Hilfsformteil 70 entfernt wurde und die Ringeinrichtung 80 auf die ausgewählte Formeinrichtung 51 aufgelegt wurde.

Dann ergibt sich die in Figur 8 links zu erkennende Lagenstruktur, wobei aufgrund der Eigensteifigkeit der verwendeten Prepregs 30 als Faserlagen 21-23 und 25 der überstehende Verstärkungsabschnitt 21a und die entsprechenden überstehenden Bereiche der Faserlagen 25 (im Wesentlichen) ihre Form behalten. Im Anschluss daran kann die andere Formeinrichtung 61 auf die (ausgewählte) Formeinrichtung 51 und die Ringeinrichtung 80 aufgelegt werden, sodass sich insgesamt ein geschlossenes Felgenprofil für die Felge 1 ergibt. Dabei wird dann im Bereich des Felgenhorns 7 die auf die Formeinrichtung 61 aufgelegte Faserlage 22 gegen die Faserlage 23 an der Ringeinrichtung 80 gedrückt. Im Bereich des Felgenbodens wird die Faserlage 22 gegen den Verstärkungsabschnitt 21 gedrückt. Der im weiteren Verlauf im Inneren der Hohlkammer 10 der Felge 1 aufgepumpte Schlauch 32 drückt dann alle Lagen zuverlässig aneinander und nach außen an die Formeinrichtungen 51 und 62 und die Ringeinrichtung 80 an.

Die optisch besonders wichtigen Außenflächen der fertigen Felge werden hochwertig ausgebildet, da die jeweilig äußeren Faserlagen 21, 22 und 23, die die Sichtlagen der fertigen Felge 1 bilden, jeweils vollflächig und separat an die entsprechenden Kontaktflächen (Flankenkontaktflächen 52, 62 und Felgenbettkontaktfläche 84) angedrückt wurden.

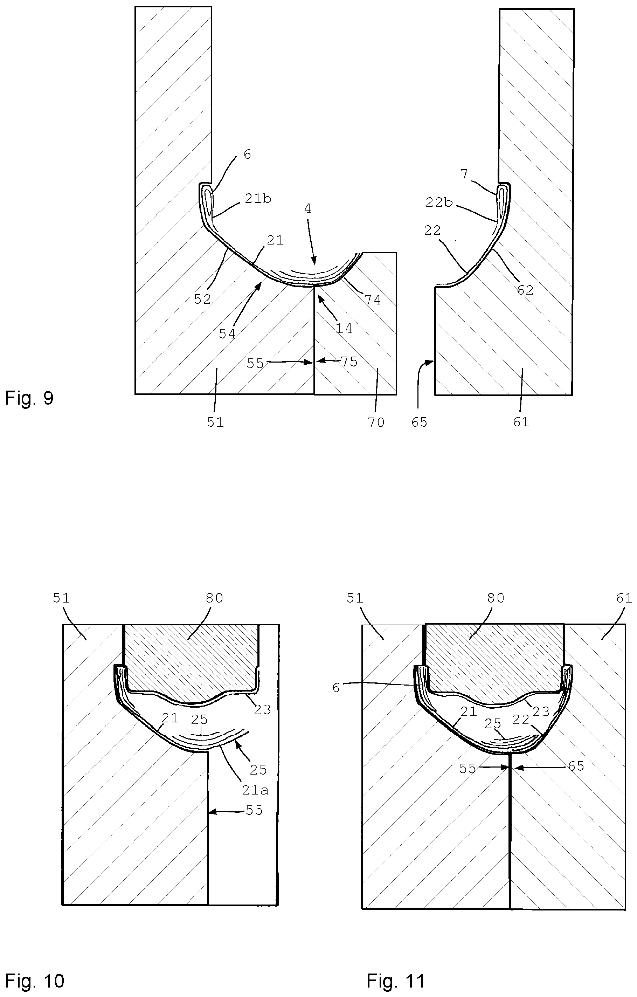

Figur 9 zeigt den Zustand bei der Herstellung einer Felge 1, nachdem eine erste Faserlage 21 auf die Felgenkontaktfläche 52 der ausgewählten Formeinrichtung 51 und den Felgenbodenbereich 74 des Hilfsformteils 70 aufgelegt wurde. Des weiteren wurden Verstärkungslagen 25 aufgelegt, die an der Formfläche 14 des Felgenbodens 4 anliegen und die entsprechende Form einnehmen. Im linken Teil von Figur 9 liegen die Trennflächen 55 und 75 der Formeinrichtung 51 und des Hilfsformteils 70 noch aneinander an.

Im radial äußeren Bereich ist zu erkennen, dass im Bereich des Felgenhorns 6 die Faserlage 21 umgeschlagen wurde und einen umgeschlagenen und radial nach innen verlaufenden Abschnitt 21b bildet, um das Felgenhorn 6 dort zu verstärken.

In entsprechender Weise wird auch die andere Formeinrichtung 61 mit Faserlagen 22 bestückt, wobei sich die Faserlage 22 nur über die Flankenkontaktfläche 62 erstreckt. Aber auch dort wird ein Abschnitt 22b im Bereich des Felgenhorns 7 umgeschlagen.

Im Anschluss wird das Hilfsformteil 70 vorsichtig entfernt und es wird die andere Formeinrichtung 61 mit der Trennfläche 65 an die Trennfläche 55 der (ausgewählten) Formeinrichtung 51 herangeführt und beide werden dort miteinander befestigt. Dies geschieht aber vorzugsweise erst nachdem die Ringeinrichtung 80 (in Figur 9 nicht abgebildet) auf die ausgewählte Formeinrichtung 51 aufgelegt wurde (vgl. z. B. Figur 10).

Figuren 10 und 11 zeigen verschiedene Verfahrensschritte bei der Herstellung einer anderen Felge mit einem anderen Lagenbild, wobei in Figur 10 der Zustand dargestellt ist, nachdem zuvor auf die Felgenkontaktfläche 52 und den Felgenbodenbereich 74 eines Hilfsformteils Faserlagen 21 und 25 aufgelegt wurden und das Hilfsformteil 70 wieder entfernt wurde. Der überstehende Abschnitt 21a verstärkt später den Felgenboden 4 in dem Bereich der Felgenflanke 3.

Figur 11 zeigt den nächsten Schritt bei der Herstellung der Felge 1 nach Figur 10, wobei die andere Formeinrichtung 61 auf die Ringeinrichtung 80 und die ausgewählte Formeinrichtung 51 aufgelegt wurde. Nun ist das hier beispielhaft eingezeichnete vollständige Lagenbild erkennbar.

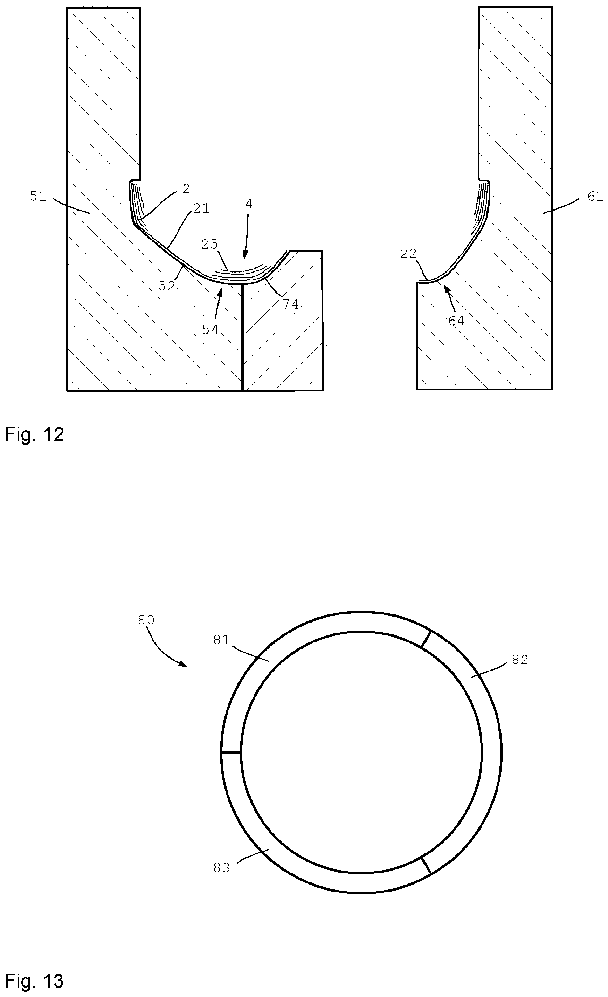

Figur 12 zeigt einen Zwischenschritt bei der Herstellung einer weiteren Felge 1, wobei im linken Bereich die Faserlagen 21 und 25 dargestellt sind, die auf die ausgewählte Formeinrichtung 51 und den Felgenbodenbereich 74 des Hilfsformteils 70 aufgelegt sind, während im rechten Teil von Figur 12 die Faserlage 22 und die anderen Faserlagen dargestellt sind, die auf die Flankenkontaktfläche 62 und den Felgenbodenbereich 64 aufgelegt sind.

Figur 13 zeigt schließlich eine schematische Draufsicht auf die Ringeinrichtung 80, bei dem die drei umfänglich angeordneten Ringsegmente 81-83 erkennbar sind.

In allen Ausführungen können die verschiedenen Faserlagen unter unterschiedlichen Winkeln zueinander aufeinander aufgelegt werden. So können bei einer Lage die Fasern (Kettfäden oder Schussfäden eines Gewebes) unter 30°, 60° oder auch unter 45° zur Umfangsrichtung der fertigen Felge ausgerichtet sein. Bei einer darüber angeordneten Lage können die entsprechenden Fasern unter einem anderen Winkel (z. B. einem anderen der angeführten Winkel) ausgerichtet sein.

Insgesamt stellt die Erfindung ein vorteilhaftes Verfahren und eine vorteilhafte Werkzeugeinrichtung zur Verfügung, womit Felgen 1 herstellbar sind, die eine hohe Qualität reproduzierbar aufweisen. Es ist möglich, ohne aufwendiges Nacharbeiten eine hohe Oberflächenqualität der äußeren sichtbaren Oberflächen zur Verfügung zu stellen. Eine zusätzliche Auftragung einer Lackschicht oder eine Lackierung oder dergleichen ist nicht nötig. Das wird unter anderem dadurch ermöglicht, dass die äußeren Sichtlagen aller äußeren Oberflächen unmittelbar und direkt an die entsprechenden Formflächen der Werkzeugeinrichtung angedrückt werden können.

Das Herstellverfahren ist einfach und ermöglicht dadurch die Vermeidung von Fehlern und verringert die Ausschussrate.

### Bezugszeichenliste:

| | | | |
|---|---|---|---|
| 1 | Felge | 56 | Befestigungsmittel |
| 2, 3 | Felgenflanke | 57 | Ausrichteinheit |
| 4 | Felgenboden | 61 | Formeinrichtung |
| 5 | Felgenbett | 61a | Formeinheit |
| 6, 7 | Felgenhorn | 62 | Flankenkontaktfläche |
| 8, 9 | Sichtfläche | 64 | Felgenbodenbereich |
| 10 | Hohlkammer | 65 | Trennfläche |
| 11 | Symmetrieachse | 67 | Ausrichteinheit |
| 14 | Formfläche Felgenboden | 70 | Hilfsformteil |
| 15 | Kreuzungsbereich | 74 | Felgenbodenbereich |
| 16 | Speichenloch | 75 | Trennfläche |
| 20 | Faserverbundwerkstoff | 77 | Ausrichteinheit |
| 21 | Faserlage, Sichtlage | 80 | Ringeinrichtung |
| 21a | Verstärkungsabschnitt | 81-83 | Ringsegmente |
| 21b | umgeschlagener Abschnitt | 84 | Felgenbettkontaktfläche |
| 22 | Faserlage, Sichtlage | 85,86 | Ringsegmente |
| 22b | umgeschlagener Abschnitt | 87 | Ausrichteinheit |
| 23 | Faserlage, Sichtlage | 90 | Schließring |
| 24 | Faserlage | 91 | Klemmabschnitt |
| 25 | Verstärkungslage | 100 | Fahrrad |
| 29 | Faserstrang | 101 | Rad, Vorderrad |
| 30 | Prepreg | 102 | Rad, Hinterrad |
| 32 | Schlauch | 103 | Rahmen |
| 41 | Pressring | 104 | Gabel, Federgabel |
| 42 | Pressring | 105 | Hinterraddämpfer |
| 50 | Werkzeugeinrichtung | 106 | Lenker |
| 51 | Formeinrichtung | 107 | Sattel |
| 51a | Formeinheit | 109 | Speiche |
| 52 | Flankenkontaktfläche | 110 | Nabe |
| 54 | Felgenbodenbereich | 112 | Tretkurbel |
| 55 | Trennfläche | | |

## Patentansprüche

1. Verfahren zur Herstellung einer Felge (1) aus Faserverbundwerkstoff für wenigstens teilweise muskelbetriebene Fahrzeuge und insbesondere Fahrräder (100) unter Verwendung einer Werkzeugeinrichtung (50) mit zwei Formeinrichtungen (51, 61), z. B. einer linken Formeinrichtung (51) und einer rechten Formeinrichtung (61), und mit einer Ringeinrichtung (80), mit folgenden Schritten:
- Es wird eine Formeinrichtung (51) der beiden Formeinrichtungen (51, 61) ausgewählt und bereitgestellt, die eine Flankenkontaktfläche (52) zur Ausbildung einer seitlichen Felgenflanke (2) umfasst,
- Es wird ein zu der ausgewählten Formeinrichtung (51) passendes Hilfsformteil (70) der Werkzeugeinrichtung (50) mit der ausgewählten Formeinrichtung (51) verbunden, sodass die ausgewählte Formeinrichtung (51) zusammen mit dem Hilfsformteil (70) eine um eine Symmetrieachse (11) der Felge umlaufende Formfläche (14) für den Felgenboden (4) bildet, welche bereichsweise (54) auf der ausgewählten Formeinrichtung (51) und bereichsweise (74) auf dem Hilfsformteil (70) ausgebildet ist,
- Es wird eine erste Faserlage (21) des Faserverbundwerkstoffs auf die Flankenkontaktfläche (52) der ausgewählten Formeinrichtung (51) aufgebracht, welche als Sichtlage wenigstens einen überwiegenden Teil der Sichtfläche (8) der zugehörigen Felgenflanke (2) bildet, wobei die erste Faserlage (21) nicht nur auf die Flankenkontaktfläche (52) der ausgewählten Formeinrichtung (51), sondern auch auf den Felgenbodenbereich (74) des Hilfsformteils (70) aufgebracht wird, um im Bereich des Felgenbodens eine durchgängige erste Faserlage (21) zu bilden, wobei das Hilfsformteil (70) anschließend wieder entfernt wird,
- Es wird die andere Formeinrichtung (61) bereitgestellt, die eine Flankenkontaktfläche (62) zur Ausbildung der anderen seitlichen Felgenflanke (3) umfasst,
- Es wird eine erste Faserlage (22) des Faserverbundwerkstoffs auf die Flankenkontaktfläche (62) der anderen Formeinrichtung (61) aufgebracht, welche als Sichtlage wenigstens einen überwiegenden Teil der Sichtfläche (9) der anderen Felgenflanke (3) bildet,
- Es wird eine Mehrzahl von Ringsegmenten (81-83) zu einer Ringeinrichtung (80) mit einer umlaufenden Felgenbettkontaktfläche (84) verbunden und darauf wird wenigstens eine erste Faserlage (23) des Faserverbundwerkstoffs aufgebracht, welche das Felgenbett (5) bildet,
- Die Ringeinrichtung (80) wird an eine der Formeinrichtungen (51) angelegt und die andere Formeinrichtung (52) wird daran angelegt und die Ringeinrichtung (80) und die Formeinrichtungen (51, 61) werden miteinander verbunden,
- Der Faserverbundwerkstoff (20) wird verfestigt und es werden die Ringsegmente (81-83) und die Formeinrichtungen (51, 61) entfernt
- nach der Entnahme der Felge (1) aus der Werkzeugeinrichtung (50) werden Speichenlöcher (16) eingebracht.

2. Verfahren nach dem vorhergehenden Anspruch, wobei die Faserlagen (21-23) an die Formeinrichtungen (51, 61) der Werkzeugeinrichtung (50) angedrückt werden, um einen vollflächigen Kontakt zwischen den Faserlagen (21-23) und den Flankenkontaktflächen (52, 62) zu gewährleisten,
und wobei alle Faserlagen (21-23), die als Sichtlagen im bestimmungsgemäßen Gebrauch die sichtbaren Außenflächen (8, 9) bilden, an die Formeinrichtungen (51, 61) und die Ringeinrichtung (80) der Werkzeugeinrichtung (50) angedrückt werden, um einen vollflächigen Kontakt zwischen den Faserlagen (21-23) und den Flankenkontaktflächen (52, 62) zu gewährleisten und Fehlstellen an der sichtbaren Oberfläche (8, 9) zu verhindern und um ein Nacharbeiten der sichtbaren Oberfläche (8, 9) und insbesondere ein Nachlackieren der äußeren Oberfläche (8, 9) zur Verdeckung von Lufteinschlüssen und anderen Fehlstellen zu vermeiden.

3. Verfahren nach dem vorhergehenden Anspruch, wobei das Hilfsformteil (70) von der ausgewählten Formeinrichtung (51) entfernt wird, bevor die erste Faserlage (22) des Faserverbundwerkstoffs auf die Flankenkontaktfläche (62) der anderen Formeinrichtung (61) aufgebracht wird und wobei die beiden mit Faserlagen belegten Formeinrichtungen (51, 61) miteinander verbunden werden
und wobei die auf die ausgewählte Formeinrichtung (51) aufgebrachte erste Faserlage (21) im Bereich der Flankenkontaktfläche (52) die Sichtlage mit der Sichtfläche (8) der zugehörigen Felgenflanke (2) und im Felgenbodenbereich (74) des Hilfsformteils (70) eine Verstärkungslage (25) des Felgenbodens (4) und nicht die Sichtlage mit der Sichtfläche (9) der anderen Felgenflanke (3) bildet
und wobei die beiden Formeinrichtungen (51, 61) und das Hilfsformteil (70) jeweils eine senkrecht zu einer Symmetrieachse (11) der Felge verlaufende Trennfläche (55, 65, 75) aufweisen, an der sie wahlweise aneinander angelegt werden.

4. Verfahren nach einem der vorhergehenden Ansprüche, wobei in die beiden miteinander verbundenen Formeinrichtungen (51, 61) wenigstens eine Verstärkungslage (25) eingebracht wird.

5. Verfahren nach einem der vorhergehenden Ansprüche, wobei Felgenhörner (6, 7) an den beiden Felgenflanken (2, 3) ausgebildet werden
und wobei ein Felgenhorn (6, 7) durch Faserlagen (21, 22) gebildet wird, welche auf eine der Formeinrichtungen (51, 61) und auf die Ringeinrichtung (80) aufgebracht sind,
und wobei an wenigstens einem Felgenhorn (6, 7) eine Faserlage (21, 22) am radial äußeren Rand umgeschlagen und radial nach innen zurück umgelegt wird.

6. Verfahren nach einem der vorhergehenden Ansprüche, wobei alle Sichtflächen an der fertigen Felge (1) durch die beiden Formeinrichtungen (51, 61) und die Ringeinrichtung gebildet werden.

7. Verfahren nach einem der vorhergehenden Ansprüche, wobei die Ringeinrichtung (80) in Umfangsrichtung wenigstens zwei und Ringsegmente (81-83) umfasst
und wobei die Ringeinrichtung (80) in axialer Richtung quer zu der Umfangsrichtung wenigstens zwei Ringsegmente (81-83, 85, 86) umfasst, wobei die axial mittleren Ringsegmente (85) keilförmig ausgebildet sind
und wobei ein Schließring (90) außen um die miteinander verbundenen Formeinrichtungen (51, 61) und die Ringeinrichtung (80) gelegt wird.

8. Verfahren nach einem der vorhergehenden Ansprüche, wobei die mit den Faserlagen bestückte Werkzeugeinrichtung (50) evakuiert wird
und wobei die Werkzeugeinrichtung (50) in eine Presseinrichtung (95) eingebracht und beheizt wird.

9. Verfahren nach einem der vorhergehenden Ansprüche, wobei Prepregs (30) als Faserlagen (21-25) verwendet werden und wobei Harzmaterial eingebracht wird.

10. Verfahren nach einem der vorhergehenden Ansprüche, wobei ein aufblasbarer Schlauch (32) eingelegt wird, bevor die Formeinrichtungen (51, 61) mit der Ringeinrichtung (80) verbunden werden und wobei der Schlauch (32) nach dem Befestigen der Formeinrichtungen (51, 61) mit der Ringeinrichtung (80) aufgeblasen wird.

11. Werkzeugeinrichtung (50) zur Herstellung einer Felge (1) für wenigstens teilweise muskelbetriebene Fahrzeuge und insbesondere Fahrräder (100) mit gegenüberliegenden Felgenflanken (2, 3), einem Felgenbett (5) und einem Felgenboden (4) und mit Speichenlöchern (16) zur Anbringung von Speichen, wobei sich an dem Felgenboden (4) im radial innersten Punkt die Felgenflanken (2, 3) treffen, umfassend zwei Formeinrichtungen (51, 61) und eine Ringeinrichtung (80), wobei die Formeinrichtungen (51, 61) jeweils Kontaktflächen (52, 62) zur Ausbildung einer Felgenflanke (2, 3) aufweisen und wobei die Ringeinrichtung (80) eine Mehrzahl umfänglich zusammengesetzter Ringsegmente (81-83) umfasst und wobei die Ringeinrichtung (80) im radial inneren Bereich eine Kontaktfläche (84) zur Ausbildung des Felgenbettes (5) aufweist,
und umfassend wenigstens ein Hilfsformteil (70), welches zusammen mit einer der Formeinrichtungen (51, 61) eine Formfläche (14) für den Felgenboden (4) ausbildet.

12. Werkzeugeinrichtung (50) nach dem vorhergehenden Anspruch, wobei die Formeinrichtungen (51, 61) und/oder die Ringeinrichtung (80) spanend gefertigt/bearbeitet sind,
und wobei wenigstens eine der Formeinrichtungen (51, 61) und die Ringeinrichtung (80) an den Kontaktflächen (52, 62, 84) mit der herzustellenden Felge (1) poliert sind.

13. Werkzeugeinrichtung (50) nach einem der vier vorhergehenden Ansprüche, wobei die Formeinrichtungen (51, 61) und/oder die Ringeinrichtung (80) und/oder das Hilfsformteil (70) miteinander korrespondierende Ausrichteinheiten (57, 67, 77, 87) aufweisen,
und wobei an den Ausrichteinheiten (57, 67, 77, 87) Befestigungsmittel (56) montiert werden können.

14. Werkzeugeinrichtung (50) nach einem der sieben vorhergehenden Ansprüche, wobei wenigstens eine Formeinrichtung (51, 61) ein Gewicht kleiner 15 kg aufweist und wobei die beiden Formeinrichtung (51, 61) und die Ringeinrichtung (80) im zusammengebauten Zustand ein Gesamtgewicht kleiner 35 kg aufweisen.

## Claims

1. Method of manufacturing a rim (1) from a fibrous composite material for at least partially muscle-powered vehicles and in particular bicycles (100), employing a tool device (50) with two molding devices (51, 61), e.g. a left-side molding device (51) and a right-side molding device (61), and with a circular device (80), with the following steps:
- One molding device (51) of the two molding devices (51, 61) is selected and provided, which comprises a flank contact surface (52) to form a lateral rim flank (2),
- An auxiliary molding part (70) of the tool device (50) matching the selected molding device (51) is connected with the selected molding device (51), so that the selected molding device (51) together with the auxiliary molding part (70) forms a mold surface (14) for the rim base (4) circling an axis of symmetry (11) of the rim, which is configured in sections (54) on the selected molding device (51), and in sections (74), on the auxiliary molding part (70),
- A first fiber layer (21) of the fibrous composite material is applied to the flank contact surface (52) of the selected molding device (51), which, constituting a visible layer, forms at least a major part of the visible surface (8) of the pertaining rim flank (2), wherein the first fiber layer (21) is not only applied to the flank contact surface (52) of the selected molding device (51), but also to the rim base region (74) of the auxiliary molding part (70), to form a continuous first fiber layer (21) in the region of the rim base, wherein the auxiliary molding part 70) is subsequently removed.
- The other of the molding devices (61) is provided, which comprises a flank contact surface (62) to form the other, lateral rim flank (3),
- A first fiber layer (22) of the fibrous composite material is applied to the flank contact surface (62) of the other of the molding devices (61), which, constituting a visible layer, forms at least a major part of the visible surface (9) of the other of the rim flanks (3),
- A plurality of annular segments (81-83) is connected to form a circular device (80) having a circumferential rim well contact surface (84), on which at least one first fiber layer (23) of the fibrous composite material is applied, forming the rim well (5),
- The circular device (80) is placed against one of the molding devices (51), and the other of the molding devices (52) is placed against it, and the circular device (80) and the molding devices (51, 61) are connected with one another,
- The fibrous composite material (20) is allowed to set, and the annular segments (81-83) and the molding devices (51, 61) are removed,
- After removing the rim (1) from the tool device (50), spoke holes (16) are made.

2. The method according to the preceding claim, wherein the fiber layers (21-23) are pressed against the molding devices (51, 61) of the tool device (50), to ensure full-surface contact between the fiber layers (21-23) and the flank contact surfaces (52, 62), and wherein all of the fiber layers (21-23), which form the visible outer surfaces (8, 9) as visible layers in use as intended, are pressed against the molding devices (51, 61) and the circular device (80) of the tool device (50), to ensure full-surface contact between the fiber layers (21-23) and the flank contact surfaces (52, 62), and to prevent flaws on the visible surface (8, 9), and to avoid refinishing work to the visible surface (8, 9) and in particular re-varnishing the outer surface (8, 9) to cover up air pockets and other flaws.

3. The method according to the preceding claim, wherein the auxiliary molding part (70) is removed from the selected molding device (51), prior to applying the first fiber layer (22) of the fibrous composite material to the flank contact surface (62) of the other molding device (61), and wherein the two molding devices (51, 61) covered with fiber layers are interconnected, and wherein the first fiber layer (21) applied to the selected molding device (51), forms the visible layer with the visible surface (8) of the pertaining rim flank (2) in the region of the flank contact surface (52), and in the rim base region (74) of the auxiliary molding part (70), forms a reinforcement layer (25) of the rim base (4) but does not form the visible layer with the visible surface (9) of the other of the rim flanks (3), and wherein the two molding devices (51, 61) and the auxiliary molding part (70) each show a mold parting surface (55, 65, 75) running perpendicular to the axis of symmetry (11) of the rim, where they are selectively placed against one another.

4. The method according to any of the preceding claims, wherein at least one reinforcement layer (25) is incorporated in the two interconnected molding devices (51, 61).

5. The method according to any of the preceding claims, wherein rim flanges (6, 7) are configured on the two rim flanks (2, 3), and wherein one rim flange (6, 7) is formed by fiber layers (21, 22), which are applied to one of the molding devices (51, 61) and to the circular device (80), and wherein one fiber layer (21, 22) on at least one rim flange (6, 7) is folded over at its radially outwardly edge and is radially folded back inwardly.

6. The method according to any of the preceding claims, wherein all the visible surfaces on the finished rim (1) are formed by the two molding devices (51, 61) and the circular device.

7. The method according to any of the preceding claims, wherein the circular device (80) comprises at least two annular segments (81-83) in the peripheral direction,
and wherein the circular device (80) comprises at least two annular segments (81-83, 85, 86) in the axial direction transverse to the peripheral direction, wherein the axially central annular segments (85) are configured in a wedge shape, and wherein a locking ring (90) is placed on the outside around the interconnected molding devices (51, 61) and the circular device (80).

8. The method according to any of the preceding claims, wherein the tool device (50) loaded with the fiber layers is evacuated, and wherein the tool device (50) is inserted into a pressure device (95) and heated.

9. The method according to any of the preceding claims, wherein prepregs (30) are used for fiber layers (21-25), and wherein resin material is inserted.

10. The method according to any of the preceding claims, wherein an inflatable tube (32) is inserted, prior to connecting the molding devices (51, 61) with the circular device (80), and wherein, after fastening the molding devices (51, 61) to the circular device (80), the tube (32) is inflated.

11. Tool device (50) for manufacturing a rim (1) for at least partially muscle-powered vehicles and in particular bicycles (100), having opposite rim flanks (2, 3), a rim well (5) and a rim base (4), and with spoke holes (16) for attaching spokes, where the rim flanks (2, 3) meet in the radially most inwardly point of the rim base (4), comprising two molding devices (51, 61) and one circular device (80), wherein the molding devices (51, 61) each comprise contact surfaces (52, 62) for forming a rim flank (2, 3), and wherein the circular device (80) comprises a plurality of circumferentially composed annular segments (81-83), and wherein the circular device (80) comprises in the radially inwardly region, a contact surface (84) for forming the rim well (5),
and comprising at least one auxiliary molding part (70), which, together with one of the molding devices (51, 61), forms a mold surface (14) for the rim base (4).

12. The tool device (50) according to the preceding claim, wherein the molding devices (51, 61) and/or the circular device (80) are manufactured/finished by chip removal, and wherein at least one of the molding devices (51, 61) and the circular device (80) are polished on the contact surfaces (52, 62, 84) with the manufactured rim (1).

13. The tool device (50) according to any of the four preceding claims, wherein the molding devices (51, 61) and/or the circular device (80) and/or the auxiliary molding part (70) show alignment units (57, 67, 77, 87) corresponding to one another, and wherein fasteners (56) can be mounted to the alignment units (57, 67, 77, 87).

14. The tool device (50) according to any of the seven preceding claims, wherein at least one molding device (51, 61) has a total weight of less than 15 kg, and wherein in the assembled state, the two molding devices (51, 61) and the circular device (80) have a total weight of less than 35 kg.

## Revendications

1. Procédé de fabrication d'une jante (1) en matériau composite de fibres pour des véhicules entraînés, au moins en partie, par force musculaire, et en particulier pour des bicyclettes (100), en utilisant un dispositif d'outil (50) ayant deux dispositifs de formage (51, 61), par exemple un dispositif de formage gauche (51) et un dispositif de formage droite (61), ainsi qu'une unité annulaire (80), comprenant les étapes suivantes:
- un dispositif de formage (51) parmi les deux dispositifs de formage (51, 61) est choisi et fourni, qui comprend une surface de contact de flanc (52) pour la réalisation d'un flanc latéral de jante (2),
- une pièce de formage auxiliaire (70) du dispositif d'outil (50) qui est adaptée au dispositif de formage sélectionné (51) est reliée au dispositif de formage sélectionné (51) de sorte que le dispositif de formage sélectionné (51) forme conjointement avec la pièce de formage auxiliaire (70) une surface de formage (14) pour le fond de jante (4), qui s'étend autour d'un axe de symétrie (11) de la jante et qui est formée par zones (54) sur le dispositif de formage sélectionné (51) et par zones (74) sur la pièce de formage auxiliaire (70),
- une première couche de fibres (21) du matériau composite de fibres est appliquée sur la surface de contact de flanc (52) du dispositif de formage sélectionné (51), qui constitue, en tant que couche visible, au moins une majeure partie de la surface visible (8) du flanc de jante (2) associé, dans lequel la première couche de fibres (21) est appliquée non seulement sur la surface de contact de flanc (52) du dispositif de formage sélectionné (51), mais également sur la zone de fond de jante (74) de la pièce de formage auxiliaire (70) afin de former une première couche de fibres continue (21) au niveau du fond de jante, dans lequel ladite pièce de formage auxiliaire est ensuite retirée,
- l'autre dispositif de formage (61) est fourni, qui comprend une surface de contact de flanc (62) pour la réalisation de l'autre flanc latéral de jante (3),
- une première couche de fibres (22) du matériau composite de fibres est appliquée sur la surface de contact de flanc (62) de l'autre dispositif de formage (51), qui constitue, en tant que couche visible, au moins une majeure partie de la surface visible (9) de l'autre flanc de jante (3),
- une pluralité de segments annulaires (81-83) sont assemblés pour former un dispositif annulaire (80) ayant une surface de contact circonférentielle de base de jante (84), et au moins une première couche de fibres (23) du matériau composite de fibres y est appliquée qui forme la base de jante (5),
- le dispositif annulaire (80) est appliqué contre l'un des dispositifs de formage (51), et l'autre dispositif de formage (52) est appliqué contre ceci, et le dispositif annulaire (80) et les dispositifs de formage (51, 61) sont reliés entre eux,
- le matériau composite de fibres (20) est solidifié, et les segments annulaires (81-83) et les dispositifs de formage (51, 61) sont retirés,
- après avoir retiré la jante (1) du dispositif d'outil (50), des trous pour les rayons (16) sont réalisés.

2. Procédé selon la revendication précédente, dans lequel les couches de fibres (21-23) sont plaquées contre les dispositifs de formage (51, 61) du dispositif d'outil (50) afin d'assurer un contact sur toute la surface entre les couches de fibres (21-23) et les surfaces de contact de flanc (52, 62),
et dans lequel toutes les couches de fibres (21-23) qui, en tant que couches visibles, forment les surfaces extérieures visibles (8, 9) lorsqu'elles sont utilisées comme prévu, sont plaquées contre les dispositifs de formage (51, 61) et le dispositif annulaire (80) du dispositif d'outil (50) afin d'assurer un contact sur toute la surface entre les couches de fibres (21-23) et les surfaces de contact de flanc (52, 62) et pour éviter des défauts sur la surface visible (8, 9), et afin d'éviter les retouches de la surface visible (8, 9) et en particulier la nécessité de repeindre les surfaces extérieures (8, 9) pour masquer des inclusions d'air et autres défauts.

3. Procédé selon la revendication précédente, dans lequel la pièce de formage auxiliaire (70) est retirée du dispositif de formage sélectionné (51) avant que la première couche de fibres (22) du matériau composite de fibres soit appliquée sur la surface de contact du flanc (62) de l'autre dispositif de formage (61), et dans lequel les deux dispositifs de formage (51, 61) recouverts de couches de fibres sont reliés entre eux,
et dans lequel la première couche de fibres (21) appliquée sur le dispositif de formage sélectionné (51) forme au niveau de la surface de contact de flanc (52) la couche visible avec la surface visible (8) du flanc de jante (2) associé et forme au niveau du fond de jante (74) de la pièce de formage auxiliaire (70) une couche de renforcement (25) du fond de jante (4) et non pas la couche visible avec la surface visible (9) de l'autre flanc de jante (3)
et dans lequel les deux dispositifs de formage (51, 61) et la pièce de formage auxiliaire (70) présentent chacun une surface de séparation (55, 65, 75) s'étendant perpendiculairement à un axe de symétrie (11) de la jante, sur laquelle ils sont appliqués sélectivement l'un contre l'autre.

4. Procédé selon l'une quelconque des revendications précédentes, dans lequel au moins une couche de renforcement (25) est incorporée dans les deux dispositifs de formage (51, 61) reliés entre eux.

5. Procédé selon l'une quelconque des revendications précédentes, dans lequel des rebords de jante (6, 7) sont formés sur les deux flancs de jante (2, 3) et dans lequel un rebord de jante (6, 7) est formé par des couches de fibres (21, 22) qui sont appliquées sur l'un des dispositifs de formage (51, 61) et sur le dispositif annulaire (80),
et dans lequel une couche de fibres (21, 22) sur au moins un rebord de jante (6, 7) est rabattue sur le bord radialement extérieur et est repliée radialement vers l'intérieur.

6. Procédé selon l'une quelconque des revendications précédentes, dans lequel toutes les surfaces visibles sur la jante finie (1) sont formées par les deux dispositifs de formage (51, 61) et le dispositif annulaire.

7. Procédé selon l'une quelconque des revendications précédentes, dans lequel le dispositif annulaire (80) comprend au moins deux segments annulaires (81-83) dans le sens circonférentiel,
et dans lequel le dispositif annulaire (80) comprend au moins deux segments annulaires (81-83, 85, 86) dans le sens axial, transversalement au sens circonférentiel, les segments annulaires axialement centraux (85) étant en forme de coin
et dans lequel une bague de fermeture (90) est placée extérieurement autour des dispositifs de formage (51, 61) reliés entre eux et du dispositif annulaire (80).

8. Procédé selon l'une quelconque des revendications précédentes, dans lequel le dispositif d'outil (50) équipé des couches de fibres est évacué et dans lequel le dispositif d'outil (50) est introduit dans un dispositif de pressage (95) et est chauffé.

9. Procédé selon l'une quelconque des revendications précédentes, dans lequel des préimprégnés (30) sont utilisés en tant que couches de fibres (21-25), et dans lequel un matériau de résine est introduit.

10. Procédé selon l'une quelconque des revendications précédentes, dans lequel un tube gonflable (32) est inséré avant que les dispositifs de formage (51, 61) soient reliés au dispositif annulaire (80), et dans lequel le tube (32) est gonflé après la fixation des dispositifs de formage (51, 61) au dispositif annulaire (80).

11. Dispositif d'outil (50) pour la fabrication d'une jante (1) pour des véhicules entraînés, au moins en partie, par force musculaire, et en particulier pour des bicyclettes (100), ayant des flancs de jante (2, 3) opposés, une base de jante (5) et un fond de jante (4) et des trous pour les rayons (16) destinés au montage de rayons, dans lequel les flancs de jante (2, 3) se rejoignent sur le point radial le plus interne de la base de jante (4), comprenant deux dispositifs de formage (51, 61) et un dispositif annulaire (80), dans lequel les dispositifs de formage (51, 61) présentent chacun des surfaces de contact (52, 62) pour la réalisation d'un flanc de jante (2, 3), et dans lequel le dispositif annulaire (80) comprend une pluralité de segments annulaires (81-83) assemblés circonférentiellement, et dans lequel le dispositif annulaire (80) présente une surface de contact (84) dans la zone radialement intérieure pour former la base de jante (5),
et comprenant au moins une pièce de formage auxiliaire (70) qui forme, conjointement avec l'un des dispositifs de formage (51, 61), une surface de formage (14) pour le fond de jante (4).

12. Dispositif d'outil (50) selon la revendication précédente, dans lequel les dispositifs de formage (51, 61) et/ou le dispositif annulaire (80) sont fabriqués/travaillés à enlèvement de copeaux,
et dans lequel au moins un des dispositifs de formage (51, 61) et le dispositif annulaire (80) sont polis au niveau des surfaces de contact (52, 62, 84) avec la jante (1) à fabriquer.

13. Dispositif d'outil (50) selon l'une quelconque des quatre revendications précédentes, dans lequel les dispositifs de formage (51, 61) et/ou le dispositif annulaire (80) et/ou la pièce de formage auxiliaire (70) présentent des unités d'alignement (57, 67, 77, 87) correspondant les unes avec les autres et dans lequel des moyens de fixation (56) peuvent être montés sur les unités d'alignement (57, 67, 77, 87).

14. Dispositif d'outil (50) selon l'une quelconque des sept revendications précédentes, dans lequel au moins un dispositif de formage (51, 61) présente un poids inférieur à 15 kg et dans lequel les deux dispositifs de formage (51, 61) et le dispositif annulaire (80) présentent un poids total inférieur à 35 kg en étant assemblé.
